Europäisches Patentamt

European Patent Office

Office européen des brevets

(19)

(11) **EP 1 710 652 A1**

(12) **EUROPEAN PATENT APPLICATION**
published in accordance with Art. 158(3) EPC

(43) Date of publication:
**11.10.2006 Bulletin 2006/41**

(21) Application number: **04703491.3**

(22) Date of filing: **20.01.2004**

(51) Int Cl.:
*G05D 3/12* (2006.01)        *B62D 6/00* (2006.01)
*B64C 13/50* (2006.01)        *B60T 8/00* (2006.01)

(86) International application number:
**PCT/JP2004/000425**

(87) International publication number:
**WO 2005/069095 (28.07.2005 Gazette 2005/30)**

(84) Designated Contracting States:
**DE TR**

(71) Applicant: **HITACHI, LTD.**
**Chiyoda-ku**
**Tokyo 100-8280 (JP)**

(72) Inventors:
• **KANEKAWA, Nobuyasu,**
**c/o Hitachi, Ltd.**
**1ch,Marunouchi,Chiyoda-ku,Tokyo 100-8220**
**(JP)**

• **SASAKI, Shoji,**
**c/o Hitachi, Ltd.**
**1ch,Marunouchi,Chiyoda-ku,Tokyo 100-8220**
**(JP)**
• **YOKOYAMA, Takanori,**
**c/o Hitachi, Ltd.**
**1ch,Marunouchi,Chiyoda-ku,Tokyo 100-8220**
**(JP)**

(74) Representative: **Beetz & Partner**
**Steinsdorfstrasse 10**
**D-80538 München (DE)**

(54) **BILATRAL SERVO CONTROLLER**

(57)    A position (or angle, in a rotary motion) sensor and a force (or torque, in a rotary motion) sensor of a master that are required for the construction a conventional force-feedback or parallel bilateral servo are used as mutually redundant sensors. In the force-feedback or parallel bilateral servo, a target position (angle) of a slave can be determined by a sensor other than a failed sensor, allowing a control operation to continue. Because the sensors that are originally provided for bilateral servo are utilized as redundant sensors, a control device having a predetermined reliability can be provided with a lower sensor redundancy.

FIG. 1

## Description

TECHNICAL FIELD

The present invention relates to a master-slave control system using a bilateral servo control device, and more particularly to a force feedback or parallel bilateral servo control device in which a reaction force of the slave (effecting end) acts on the master (operating end) such that an effecting force awareness can be obtained.

BACKGROUND ART

In recent years, classical mechanical controlling/operating devices that have been realized with mechanical mechanisms such as linkage are being replaced with electric controlling/operating devices in which the amount of operation performed by an operator is converted into an electrical signal and an operated article (effecting end) is operated (controlled) with the electrical signal.

Fly-by-wire in aircraft control and X-by-wire in automotive control are good examples, in which a master-slave control system is constructed of a master as an operating end and a slave as an effecting end.

Such systems are constructed as bilateral servo control devices in which a reaction force produced by the movement of the slave is fed back to the master such that an effecting force awareness can be obtained on the master end (see JP Patent Publication (Kokai) Nos. 10-202558 A (1998) and 2003-11838 A, for example).

Bilateral servos can be generally divided into the symmetric type, force-feedback type, force-reflecting type, and parallel type, as noted in a reference document (http: // paradise.kz.tsukuba.ac.jp/ ~labnhp/ labo/ study/ force/bilateral.html).

Currently, the force-feedback bilateral servo is most widely employed. As model-based control technology develops further and the technology for designing a position command generating unit is established in the future, the parallel bilateral servo, which is the best in terms of characteristics, is expected to become the mainstream.

Of the aforementioned types, the force-feedback type and the parallel type are superior to the symmetric type and the force-reflecting type in terms of operability. However, they require a position (angle) sensor and a force (torque) sensor.

In the force-feedback bilateral servo, the target position (angle) of the slave is determined in accordance with the output of a master position (angle) sensor, and the master is fitted with a force (torque) sensor for improving the response characteristics of the reaction force to the master. Specifically, the slave performs slave position control based on the positional deviation between the master and the slave, while the master performs master force control based on the deviation of force between the master and the slave.

In aircraft and automotive control applications, a mechanical backup mechanism has been provided for failure. However, the demise of mechanical mechanisms makes it necessary to increase the reliability of electrical mechanisms.

Among the X-by-wires by which vehicles are electrically controlled, the steer-by-wire that electrically controls the steering is required to have a particularly high level of reliability because of the absence of the steering position at which safety can be ensured in case of failure (fail-safe position).

Conventional techniques for increasing the reliability of the steer-by-wire include a method whereby a fail-safe is activated upon failure by switching the hydraulic routes for the entirety of the hydraulic pressure (see, e.g., JP Patent Publication (Kokai) No. 7-125643 A (1995)) and a method whereby the vehicle is controlled so that it turns by braking in case of failure of the steer-by-wire system (see, e.g., JP Patent Publication (Kokai) Nos. 11-334559 A (1999) and 2003-63373 A).

While the reliability of the steer-by-wire system can be increased by the aforementioned conventional techniques, more consideration must be given to sensor failures. The conventional techniques had no measure against sensor failures other than to provide multiple sensors. Thus, in order to ensure a predetermined level of reliability, the sensors had to be provided with sufficient redundancy, resulting in an increase in cost.

It is an object of the invention to solve the aforementioned problems and to provide a bilateral servo control device capable of achieving a predetermined level of reliability with lower sensor redundancy.

DISCLOSURE OF THE INVENTION

In order to achieve the aforementioned object, a master position (or angle, in the case of rotary motion) sensor and a force (or torque, in the case of rotary motion) sensor, which are required in a force-feedback and parallel bilateral servo configuration, are used as mutually redundant sensors, so as to increase the reliability of the bilateral servo in which the reaction force from the slave (effecting end) acts on the master (operating end).

The force-feedback bilateral servo device and the parallel bilateral servo device require a position (angle) sensor and a force (torque) sensor. By using these sensors as mutually redundant sensors, resistance against sensor failures can be provided.

Namely, in the force-feedback bilateral servo, a target position (angle) of the slave is determined by the output of the master position (angle) sensor, wherein the master is provided with a force (torque) sensor for improving the response characteristics of reaction force to the master. In accordance with the invention, in the event of failure in the master position (angle) sensor, the slave target position (angle) is determined by the output of the master force (torque) sensor.

In the parallel bilateral servo, a target position (angle) of the slave is determined by the output of the master force (torque) sensor, wherein the master is provided with a position (angle) sensor for improving the response characteristics of reaction force to the master. In accordance with the invention, in the event of failure in the master force (torque) sensor, the slave target position (angle) is determined by the output of the master position (angle) sensor.

In this way, in the force-feedback or parallel bilateral servo control device, the target position (angle) of the slave can be determined by a sensor other than the failed sensor, thus allowing the control operation to proceed.

The invention provides the following bilateral servo control devices (a) to (1):

(a) A force-feedback or parallel bilateral servo control device for a master-slave system comprising a master as an operating end and a slave as an effecting end, wherein the master comprises a first sensor for determining a control target value of the slave and a second sensor for controlling reaction force to the master, wherein the reaction force of the slave acts on the master, the device further comprising:

an operator for determining the control target value of the slave based on the outputs of the first sensor and second sensor of the master.

(b) The bilateral servo control device wherein the operator determines the control target value of the slave by adding a value related to the output of the second sensor to the output of the first sensor.

(c) The bilateral servo control device wherein the operator determines the control target value of the slave by adding a difference between a value that is related to the output of the second sensor and the control target value of the master to the output of the first sensor.

(d) The bilateral servo control device wherein the operator determines the control target value of the slave by a majority voting of a value related to the output of the second sensor and the output of the first sensor.

(e) The bilateral servo control device wherein the operator calculates the control target value of the slave by a majority voting of a difference between a value related to the output of the second sensor and the control target value of the master and the output of the first sensor.

(f) The bilateral servo control device further comprising:

a proportional calculating unit to which the output of the second sensor is fed and which outputs a value related to the output of the second sensor.

(g) The bilateral servo control device wherein the proportional calculating unit includes a dead band factor near zero.

(h) The bilateral servo control device further comprising:

an examination means for determining whether the output of the first sensor is normal or abnormal,
wherein, if the examination means determines that the output of the first sensor is normal, the control target value of the slave is determined based on the output of the first sensor, and if the examination means determines that the output of the first sensor is abnormal, the control target value of the slave is determined based on the output of the second sensor.

(i) The bilateral servo control device further comprising:

an examination means for determining whether the output of the first sensor is normal or abnormal,
wherein, if the examination means determines that the output of the first sensor is normal, the control target value of the slave is determined based on the output of the first sensor, and if the examination means determines that the output of the first sensor is abnormal, the control target value of the slave is determined based on a difference between the output of the second sensor and the control target value of the master.

(j) The bilateral servo control device wherein the master comprises a steering column for the steering control of an automobile and the slave comprises a steering mechanism of the automobile, such that the bilateral servo control device constitutes an automobile steering control device.

(k) The bilateral servo control device wherein the master comprises a brake pedal for the brake control of an automobile and the slave comprises a steering mechanism of the automobile, such that the bilateral servo control device constitutes an automobile brake control device.

(1) The bilateral servo control device wherein the master comprises an operating member, such as a control column or a side stick, of an airplane, and the slave comprises a control surface control mechanism of the airplane, such that the bilateral servo control device constitutes an aircraft control surface control device.

Thus, in a force-feedback or parallel bilateral servo, the target position (angle) of the slave can be determined by substituting one sensor for another that has failed, thereby allowing a control operation to continue. Furthermore, because the sensors that are originally provided for bilateral servo are utilized as redundant sensors, a control device having a predetermined reliability can be provided with a lower sensor redundancy.

BRIEF DESCRIPTION OF THE DRAWINGS

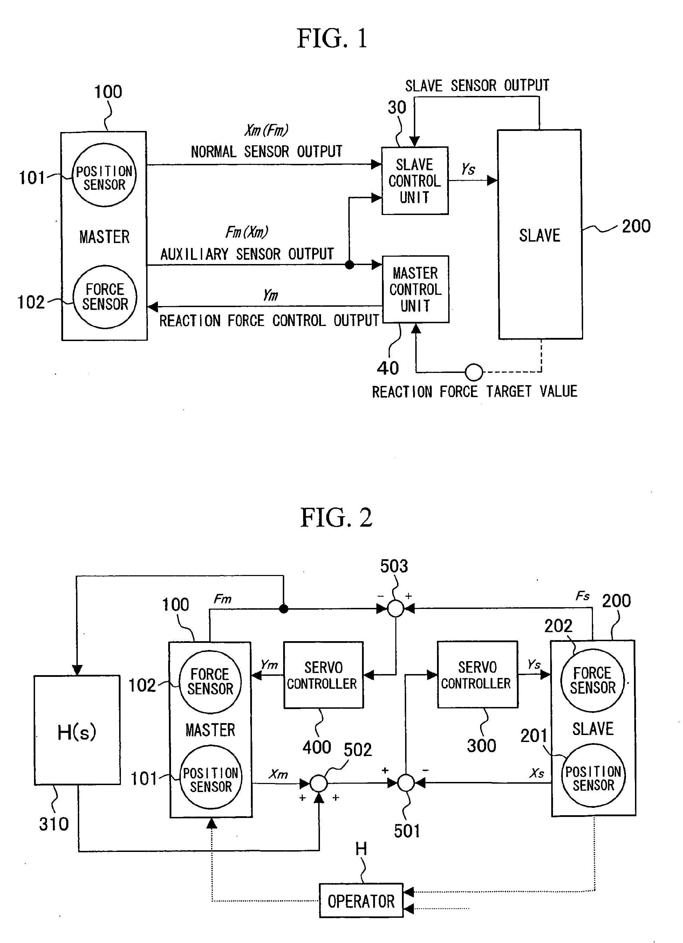

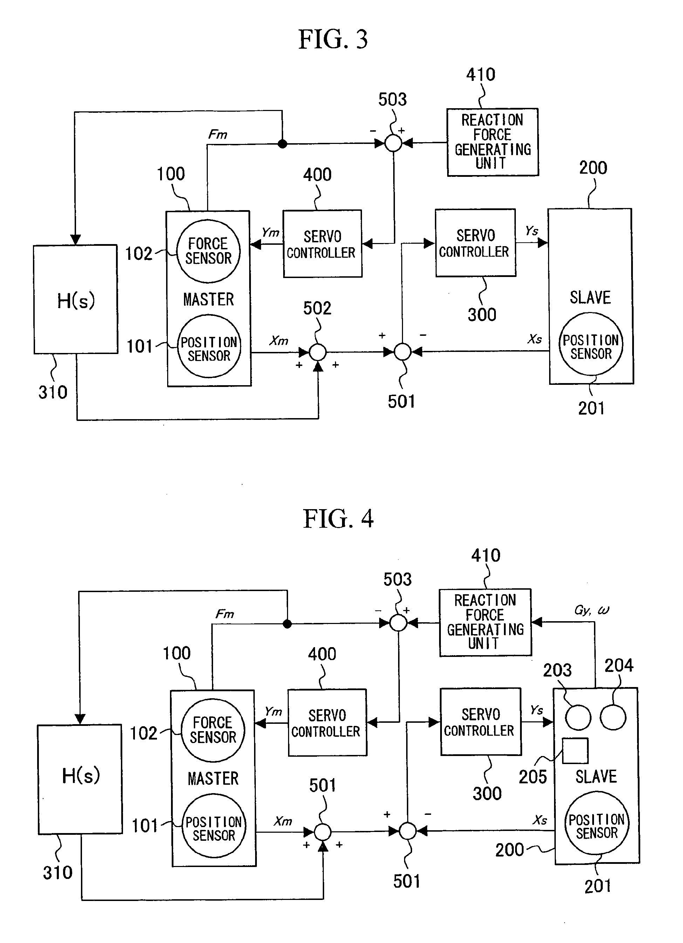

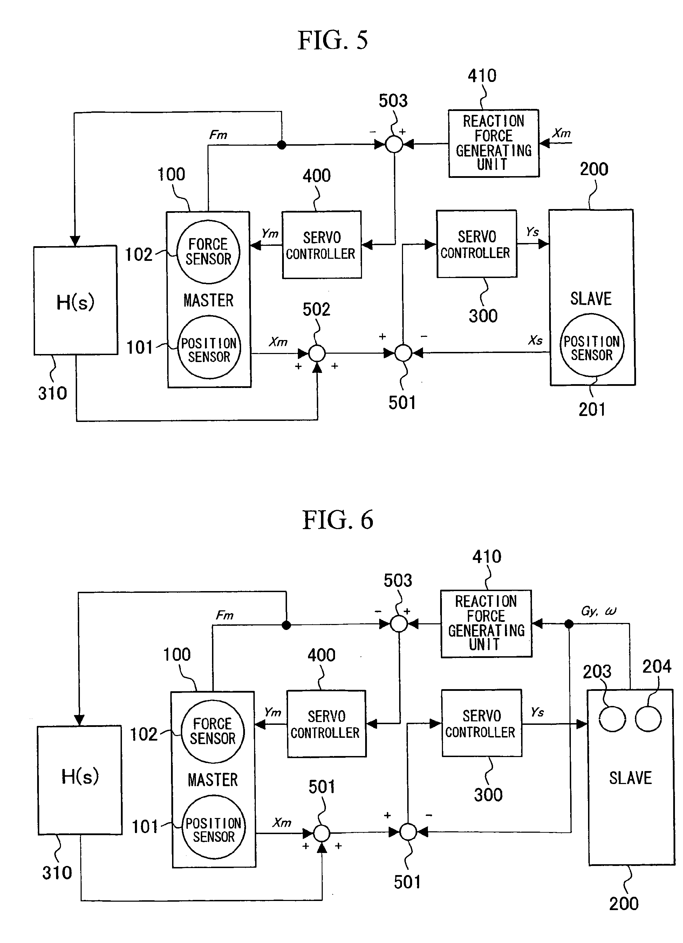

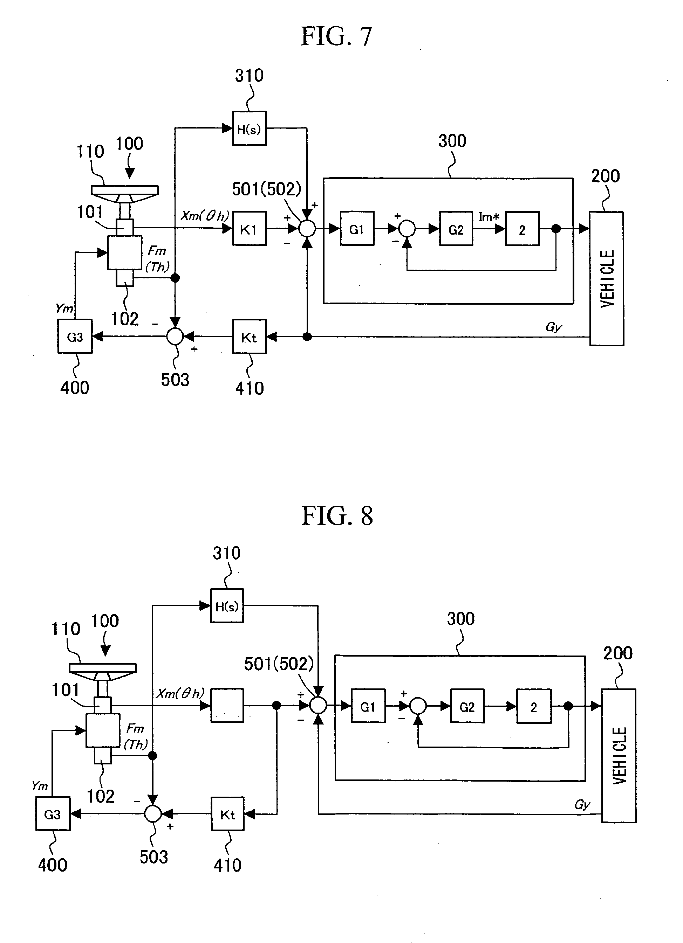

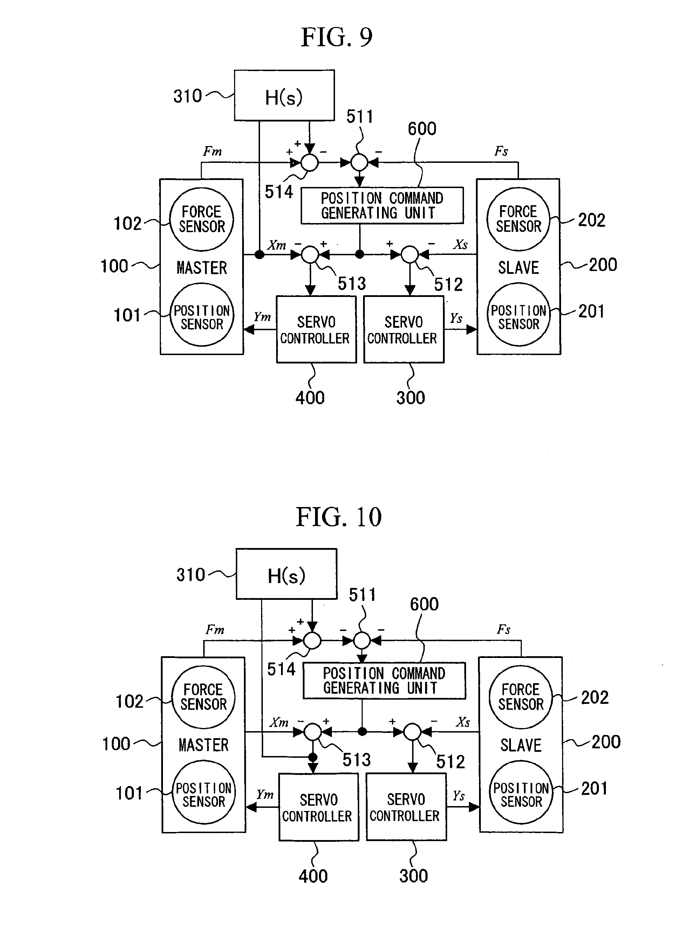

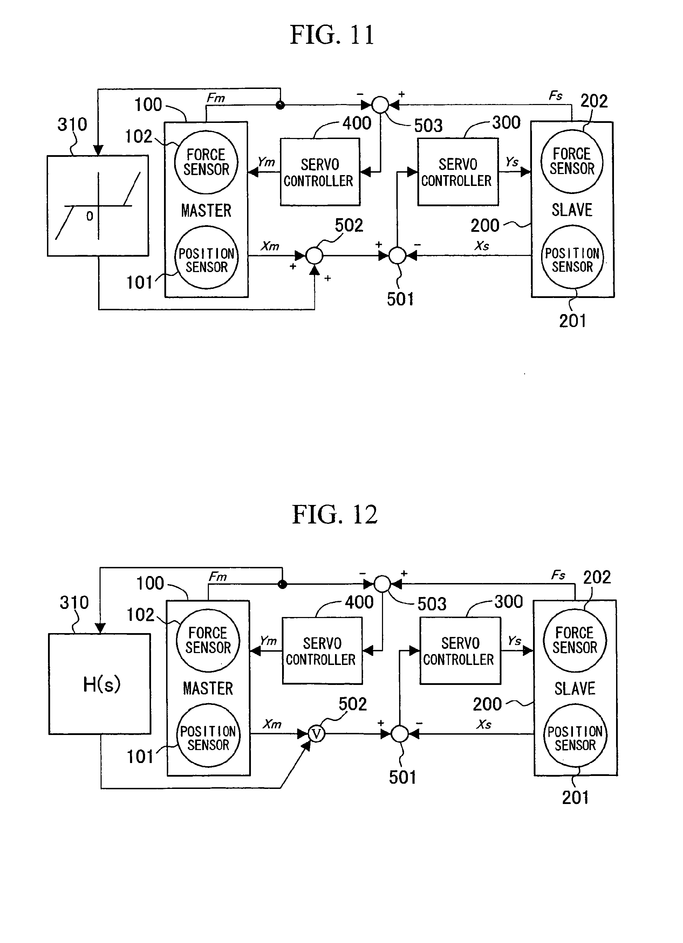

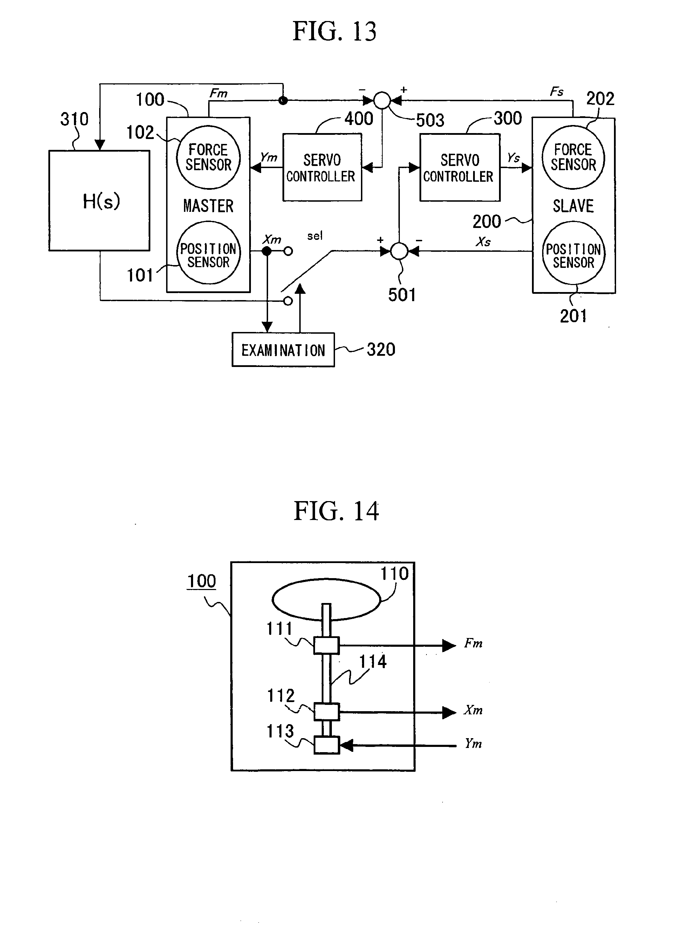

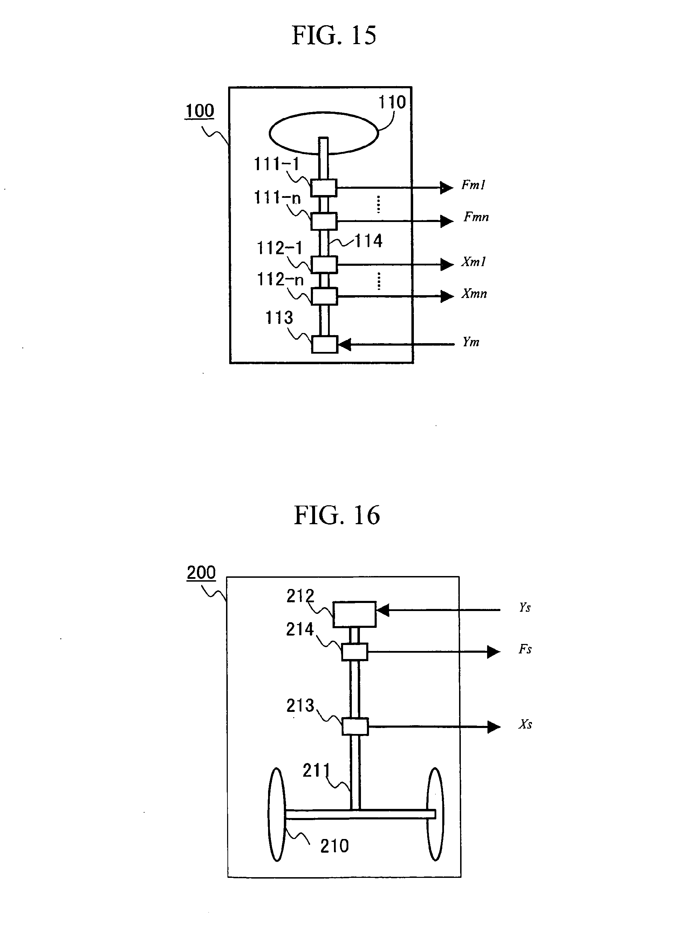

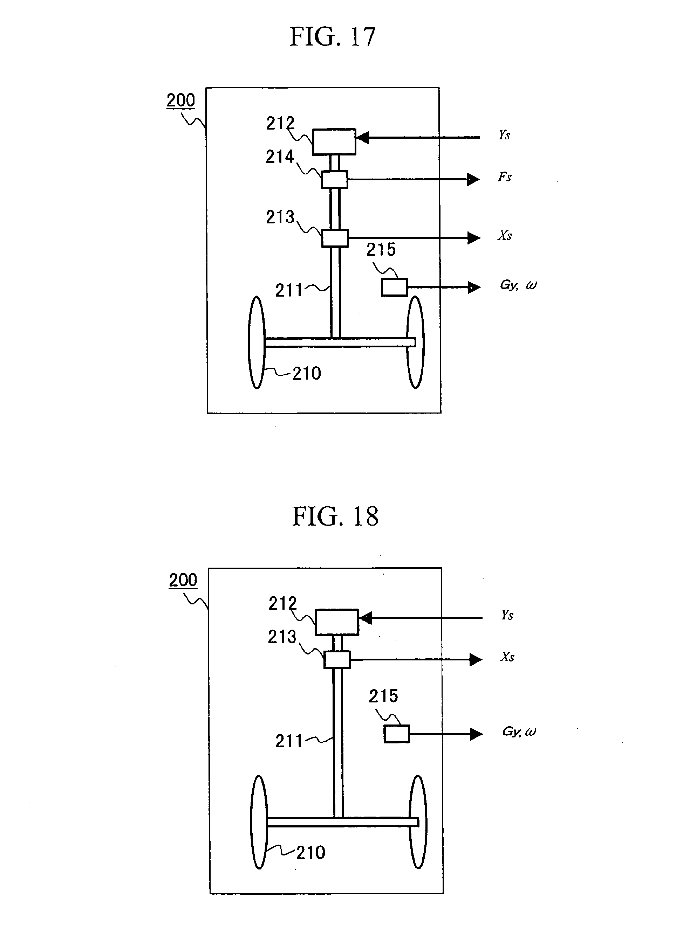

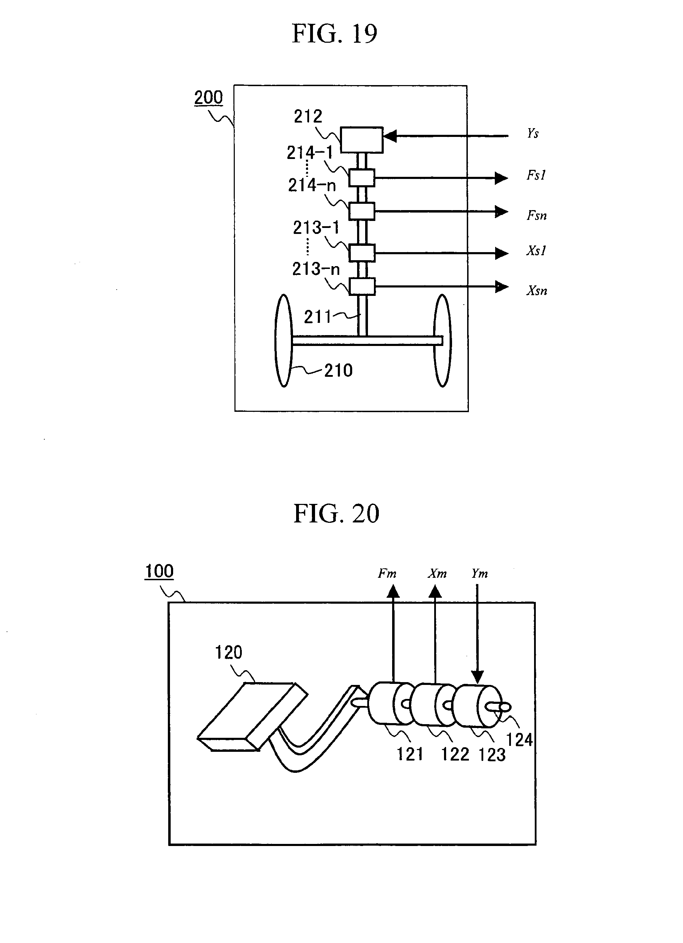

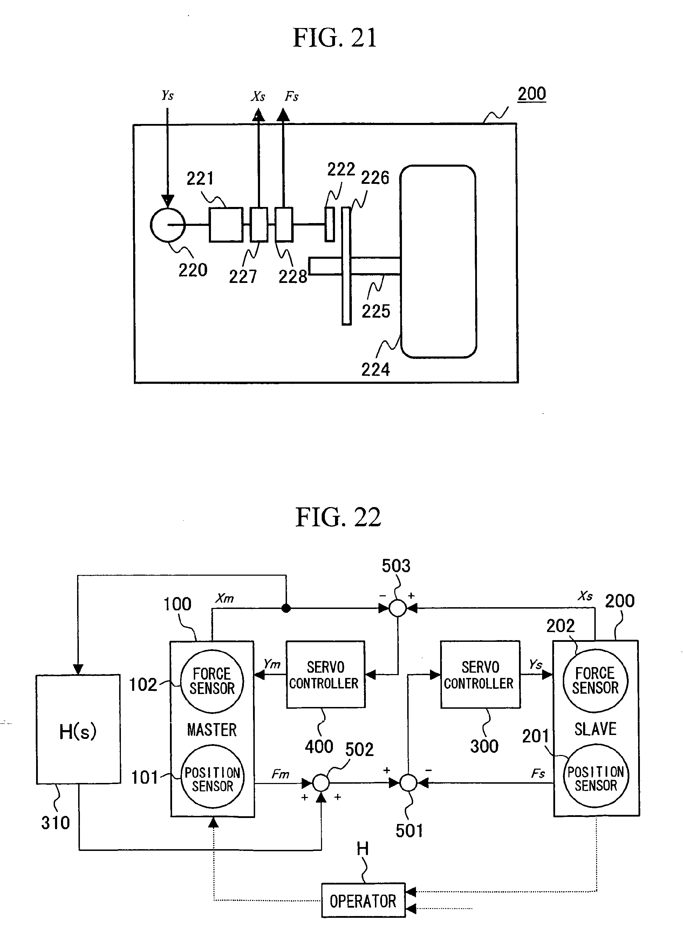

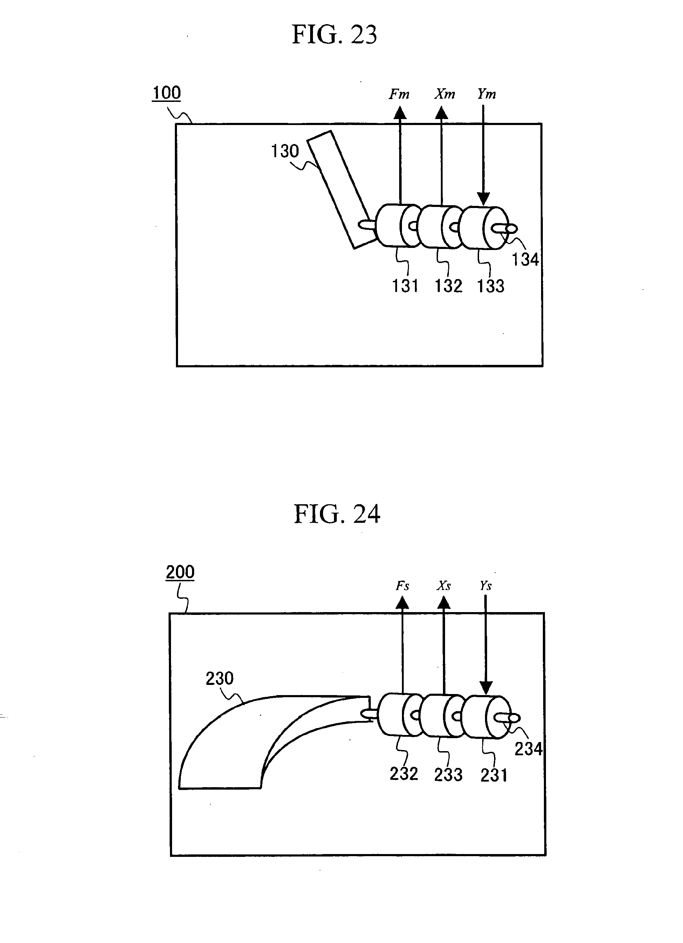

Fig. 1 shows a block diagram illustrating the basic configuration of a bilateral servo control device according to the invention. Fig. 2 shows a block diagram of an embodiment of the device of the invention as a force-feedback bilateral servo control device. Fig. 3 shows a block diagram of another embodiment of the force-feedback bilateral servo control device according to the invention. Fig. 4 shows another embodiment of the force-feedback bilateral servo control device according to the invention. Fig. 5 shows another embodiment of the force-feedback bilateral servo control device according to the invention. Fig. 6 shows another embodiment of the force-feedback bilateral servo control device according to the invention. Fig. 7 shows another embodiment of the force-feedback bilateral servo control device according to the invention. Fig. 8 shows another embodiment of the force-feedback bilateral servo control device according to the invention. Fig. 9 shows a block diagram of an embodiment of the device of the invention as a parallel bilateral servo control device. Fig. 10 shows another embodiment of the force-feedback bilateral servo control device according to the invention. Fig. 11 shows another embodiment of the force-feedback bilateral servo control device according to the invention. Fig. 12 shows another embodiment of the force-feedback bilateral servo control device according to the invention. Fig. 13 shows another embodiment of the force-feedback bilateral servo control device according to the invention. Fig. 14 shows an embodiment of a master having a steering column. Fig. 15 shows another embodiment of the master having a steering column. Fig. 16 shows an embodiment of a slave having a steering column. Fig. 17 shows another embodiment of the slave having a steering column. Fig. 18 shows another embodiment of the slave having a steering column. Fig. 19 shows another embodiment of the slave having a steering column. Fig. 20 shows an embodiment of the master having a brake pedal. Fig. 21 shows a block diagram of an embodiment of a slave having a brake mechanism. Fig. 22 shows a block diagram of an embodiment of the power semiconductor device of the invention for brake control. Fig. 23 shows a block diagram of an embodiment of a master having an operating member. Fig. 24 shows a block diagram of an embodiment of a slave having a control surface control mechanism.

BEST MODE FOR CARRYING OUT THE INVENTION

Preferred embodiments of the invention will be hereafter described with reference to the attached drawings.

Fig. 1 shows the basic configuration of a bilateral servo control device according to the invention.

The bilateral servo control device includes a master 100 as an operating end, a slave 200 as an effecting end, a slave controller 30, and a master controller 40.

The master 100 includes a position (angle) sensor 101 and a force (torque) sensor 102 and produces a normal sensor output (first sensor output) that is a sensor output for the original slave control, and an auxiliary sensor output (second sensor output) that is a sensor output for the reaction force control output of the bilateral servo.

The slave controller 30 receives the normal sensor output and the auxiliary sensor output from the master 100, determines a control target value for the slave 200 based on the normal sensor output and the auxiliary sensor output, and produces a control output Ys based on the thus determined control target value and a sensor output from the slave 200.

The master controller 40 outputs a reaction force control output Ym based on the difference between the auxiliary sensor output and a reaction force target value outputted from the master 100.

In the force-feedback bilateral servo, an output Xm of the position (angle) sensor of the master 100 corresponds to the normal sensor output, and an output Fm of the master force (torque) sensor corresponds to the auxiliary sensor output. On the other hand, in the parallel bilateral servo, the output Fm of the force (torque) sensor of the master 100 corresponds to the normal sensor output and the output Xm of the master position (angle) sensor corresponds to the auxiliary sensor output.

In conventional force-feedback bilateral servos, the output Fm of the force (torque) sensor of the master 100 is not related to the calculation of the control output Ys to the slave 200, so that $\partial Ys/\partial Fm = 0$. Similarly, in the conventional parallel bilateral servo, the output Xm of the position (angle) sensor of the master 100 is not related to the calculation of the control output Ys to the slave 200, so that $\partial Ys/\partial Xm = 0$.

In the bilateral servo control device of the invention, the amount of operation of the slave 200, namely, the control output Ys, is determined by both the output Xm of the position (angle) sensor and the output Fm of the force (torque) sensor of the master 100, so that $\partial Ys/\partial Xm \neq 0$ and $\partial Ys/\partial Fm \neq 0$. In this way, failure of the position sensor and the force sensor of the master 100 can be tolerated.

Fig. 2 shows an embodiment of the device of the invention as a force-feedback bilateral servo control device. A master 100 includes a position (angle) sensor 101 that is a first sensor, and a force (torque) sensor 102 that is a second sensor. A slave 200 includes a position (angle) sensor 201 and a force (torque) sensor 202.

The position (angle) sensor 101 provided in the master 100 outputs a position (angle) sensor output Xm as a normal sensor output. The position (angle) sensor output Xm constitutes a position (angle) target value for the slave 200. A deviation of the output Xs of the position (angle) sensor 201 of the slave 200 from the target value is calculated at a summing point (calculator) 501 and fed to a servo controller 300.

While not shown, the position (angle) sensor output Xm of the master 100 may be multiplied by a coefficient to calculate the position (angle) target value of the slave 200.

The servo controller 300 produces a control output Ys to the slave 200 based on the deviation between the position (angle) target value Xm and the position (angle) sensor output Xs. A transfer function G(s) of the servo controller 300 in the case of PI control (proportional plus integral control) is determined by:

$$G(s) = K\{1 + (1/(Ts))\}$$

where K is gain, T is time constant, and s is a Laplace operator.

Similarly, the output Fs of the force (torque) sensor 202 of the slave 200 constitutes a target value of reaction force to the master 100, and the deviation of the output Fm of the force (torque) sensor 102 of the master 100, which is the auxiliary sensor output, from the reaction force target value that is calculated at the summing point (calculator) 503 is fed to a servo controller 400. The servo controller 400 produces a control output Ym to the master 100 based on the deviation between the reaction force target value Fs and the force (torque) sensor output Fm.

While not shown, the force (torque) sensor output Fs of the slave 200 may be multiplied with a coefficient to calculate the target value of reaction force to the master 100.

The transfer function of the servo controller 400 is determined in the same way as the aforementioned transfer function of the controller 300.

The operations up to this point are the same as those of the conventional force-feedback bilateral servo control device.

Furthermore, in the force-feedback bilateral servo control device of the invention, the force (torque) sensor output Fm of the master 100, which is the auxiliary sensor output, is fed to a summing point (calculator) 502 via a proportional calculation factor (function generator or gain setting unit) 310 having a transfer function H(s). At the summing point 502, the force (torque) sensor output Fm of the master 100 is added to the position (angle) sensor output Xm of the master 100, which is the normal sensor output.

The proportional calculation factor 310 performs a calculation in accordance with a function represented by the transfer function H(s) of the force (torque) sensor output Fm of the master 100 and outputs a value having a correlation with the force (torque) sensor output Fm.

The summed value at the summing point 502 constitutes the position (angle) target value of the slave 200. The deviation of the position (angle) sensor output Xm of the slave 200 from the target value is fed to the servo controller 300, which then produces the control output Ys to the slave 300 based on the deviation.

In accordance with the above-described features of the invention, the slave 200 can be controlled not only by the position (angle) sensor output Xm of the master 100, which is a normal sensor output, but also by the force (torque) sensor output Fm of the master, which is an auxiliary sensor output.

Thus, in case the position (angle) sensor 101 of the master 100, which outputs the normal sensor output, fails, the slave 200 can be controlled by the sensor output Fm of the force (torque) sensor 102 of the master 100, which is the auxiliary sensor output.

In the X-by-wire, to which the invention is particularly directed, the behavior of the slave 200, namely, the vehicle, is fed back via an operator H to the master 100, namely, a controlling/operating unit such as the steering column (steering wheel) or the brake pedal. Therefore, as long as the slave 200 can be controlled by the master 100, no total loss of control would be produced even though a slight deterioration of operability might be caused.

Fig. 3 shows another embodiment of the force-feedback bilateral servo control device of the invention. In this embodiment, a value produced by a reaction force generating unit 410 constitutes a target value of reaction force to the master 100. The difference between the force (torque) sensor output Fm of the master 100 and the target value is fed to a servo controller 400, which calculates the control output Ym to the master 100.

An example of method for generating reaction force in the reaction force generating unit 401 is a method whereby, as shown in Fig. 4 showing a steer-by-wire application, reaction force is generated from lateral acceleration Gy that is the output of a lateral acceleration sensor 203 attached to a slave (vehicle body) and yaw rate ω that is the output of a yaw rate sensor 204. Another example is shown in Fig. 5, whereby reaction force is generated from the output Xm of the position (angle) sensor of the master 100. In these methods, the yaw rate ω or the output Xm of the position (angle) sensor could be simply multiplied by a certain coefficient to generate a target value of reaction force that is proportional to the value of the yaw rate or the sensor output.

In the case of steer-by-brake, a deceleration sensor 205 (see Fig. 4) could be used instead of the yaw rate sensor 204 so as to produce a value proportional to deceleration as the target value of reaction force.

In these embodiments, an advantage that relates to the generation of the reaction force target value can be gained that the force (torque) sensor 202 of the slave 200 can be eliminated.

Fig. 6 shows another embodiment of the force-feedback bilateral servo control device of the invention. In this embodiment, the output Xm of the position (angle) sensor of the master 100 is used as the target value of the lateral acceleration Gy of the slave 200 or the yaw rate ω. The deviation of the lateral acceleration Gy of the slave 200 or yaw rate ω from the target value Xm is fed to the servo controller 300. The servo controller 300 then generates the control output Ys to the slave 200 based on the deviation.

An example of conventional technique for generating reaction force based on the lateral acceleration Gy outputted by a lateral accelerometer is disclosed in JP Patent Publication (Kokai) No. 2003-11838 A. This technique can be applied to the force-feedback bilateral servo control device of the invention, as shown in Fig. 7.

A conventional technique for generating reaction force based on the output Xm of a position (angle) sensor of the master 100 is also disclosed in JP Patent Publication (Kokai) No. 2003-11838 A. This technique can be applied to the force-feedback bilateral servo control device of the invention, as shown in Fig. 8.

In accordance with the invention, as shown in Figs. 7 and 8, higher reliability can be achieved by simply adding, via the proportional calculation factor 310 based on the transfer function H(s), a torque (Th) of a steering wheel 110 that is equivalent to the sensor output Fm of the force (torque) sensor to an angle (θh) of the steering wheel 110 that is equivalent to the output Xm of the position (angle) sensor, in the conventional technique disclosed in JP Patent Publication (Kokai) No. 2003-11838 A.

In accordance with the conventional technique according to JP Patent Publication (Kokai) No. 2003-11838 A, the vehicle cannot be controlled if the position (angle) sensor 101 for detecting the angle θh of the steering wheel 110 fails. In accordance with the force-feedback bilateral servo control device of the invention, however, steering control of the vehicle can be performed by the servo controller 300 based on the torque Th of the steering wheel 110, namely, the force applied for operating the steering wheel 110.

In accordance with these embodiments shown in Figs. 3 to 8, the slave 200 can be controlled not only by the output Xm of the position (angle) sensor of the master 100 but also by the output Fm of the force (torque) sensor of the master 100, as in the embodiment shown in Fig. 2.

Thus, in case the position (angle) sensor 101 of the master 100 fails, the slave 200 can be controlled by means of the output Fm of the force (torque) sensor of the master 100.

Fig. 9 shows an embodiment of the present invention as a parallel bilateral servo control device. In Fig. 9, parts corresponding to those of Fig. 2 are designated with reference signs similar to those of Fig. 1 for the sake of simplicity.

The parallel bilateral servo control device includes a position command generating unit 600. A master force (torque) sensor output Fm and a slave force (torque) sensor output Fs are fed to a summing point (calculator) 511.

The position command generating unit 600 generates a position (angle) target value of the master 100 and the slave 200 based on the output of the summing point (calculator) 511, namely, the output Fm of the force (torque) sensor of the master 100, which is normal sensor outputs of the parallel bilateral servo control device, and the output Fs of the force (torque) sensor of the slave 200.

While in the figure the output Fm of the force (torque) sensor of the master and the output Fs of the force (torque) sensor of the slave are multiplied by a coefficient of 1.0, the value of the coefficient may be freely determined.

At the summing point (calculator) 512, the output Xs of the position (angle) sensor of the slave 200 is subtracted from the position (angle) target value generated by the position command generating unit 600 so as to calculate a deviation, which is fed to a servo controller 300. The servo controller 300 then generates a control output Ys to the slave 200 based on the deviation.

The auxiliary sensor output, namely, the output Xm of the position (angle) sensor of the master 100 is subtracted at the summing point (calculator) 513 from the position (angle) target value generated by the position command generating unit 600 so as to calculate a deviation. The deviation is fed to a servo controller 400, which then generates a control output Ym to the master 100 based on the deviation.

Furthermore, in accordance with the invention, the output Xm of the position (angle) sensor of the master 100, which is the auxiliary sensor output, is added, via a proportional calculation factor 310 based on the transfer function H(s), to the output Fm of the force (torque) sensor of the master 100, which is the normal sensor output, at a summing point (calculator) 514. The sum output is fed to the position command generating unit 600 together with the output Fs of the force (torque) sensor of the slave 200. The position command generating unit 600 then generates position (angle) target values of the master 100 and slave 200 based on the thus fed outputs.

In accordance with the above-described features of the invention, the slave 200 can be controlled not only by the output Fm of the force (torque) sensor of the master 100, which is the normal sensor output, but also by the output Xm of the position (angle) sensor of the master 200, which is the auxiliary sensor output.

Thus, the slave 200 can be controlled by the output Xm of the position (angle) sensor 101 of the master 100, which is the auxiliary sensor output, in case the force (torque) sensor 102 of the master 100, which is the normal sensor output, fails.

Fig. 10 shows another embodiment of the invention as a parallel bilateral servo control device.

In this embodiment, the difference (output at a summing point 513) between the output Xm of the position (angle) sensor of the master 100, which is the auxiliary sensor output, and a control target value generated by the position command generating unit 600 is added via a proportional calculation factor 310 to the output Fm of the force (torque) sensor of the master, which is the normal sensor output, at a summing point 514. The sum is then fed to the position command generating unit 600 together with the output Fs of the force (torque) sensor of the slave 200. Based on this input, the position command generating unit 600 generates position (angle) target values of the master 100 and the slave 200.

In accordance with the embodiment shown in Fig. 10, as an effecting force is applied to the master 100, a control deviation of the master 100, namely, the difference between the output Xm of the position (angle) sensor of the master 100, which is the auxiliary sensor output, and the control target value of the master 100 is produced. The slave 200 can also be controlled by the control deviation.

Thus, the slave 200 can be controlled by the output Xm of the position (angle) sensor 102 of the master 100, which is the auxiliary sensor output, in case the force (torque) sensor 101 of the master 100, which produces the normal sensor output, fails.

Fig. 11 shows another embodiment of the force-feedback bilateral servo control device according to the invention. In this embodiment, a proportional calculation factor 310 includes a dead band near zero.

In accordance with the present embodiment, the output Fm of the force (torque) sensor of the master 100, which is the auxiliary sensor output, is not always added to the output Xm of the position (angle) sensor of the master, which is the normal sensor output, but added only when more than a predetermined force (torque) is applied to the master 100.

Thus, in accordance with this embodiment, the slave is controlled by the output Fm of the force (torque) sensor of the master 100 only when the operator applied an effecting force that exceeds a predetermined level such that it is interpreted by the control system to be an emergency.

It goes without saying that the present embodiment can be applied not only to the bilateral servo control device of the type shown in Fig. 2 but also to that of the type shown in Figs. 3 to 9 as long as the proportional calculation factor 310 is provided with a dead band.

Fig. 12 shows another embodiment of the force-feedback bilateral servo control device of the invention. In this embodiment, redundancy is introduced into the output Xm of the position (angle) sensor of a master 100, and a position (angle) target value of a slave 200 is set based on a majority voting of the redundant outputs Xm of the position (angle) sensor of the master 100 together with the output Fm of the force (torque) sensor of the master 100.

The outputs Xm of the position (angle) sensor and the output Fm of the force (torque) sensor of the master 100 represent numerical data. Therefore, if a simple majority is taken of the data, no complete agreement of values would be obtained due to sensor errors and quantization error during analog-to-digital conversion. Thus, instead of the operation to take a simple majority, an operation to take an intermediate value or an average value could be considered.

It goes without saying that the present embodiment can be similarly applied to the embodiments shown in Figs. 3 to 9 as long as an operation is implemented in any of these embodiments whereby a majority (or an intermediate value or average value) is taken of the auxiliary sensor output value via the proportional calculator 310 and the normal sensor output.

Fig. 13 shows another embodiment of the force-feedback bilateral servo control device of the invention. The embodiment is provided with an examining unit (examining means) 320 for examining the output Xm of the position (angle) sensor of the master 100, which is the normal sensor output, and with a selection switch sel that is switched depending on the result of examination in the examination unit 320.

The selection switch sel is used for selecting one of the output Xm of the master position (angle) sensor, which is the normal sensor output, and the output Fm of the master force (torque) sensor, which is the auxiliary sensor output. If the result of examination by the examination unit 320 is normal, the output Xm of the master position (angle) sensor is selected. On the other hand, if the examination unit 320 detects abnormality in the output Xm of the position (angle) sensor of the master 100, the selection switch selects the output Fm of the master force (torque) sensor.

The examination unit 320 may employ a method whereby the unit considers the output Xm of the master position (angle) sensor, which is the normal sensor output, to be normal if the value thereof is within a certain range and abnormal if it is outside such range. It may alternatively employ a method whereby redundancy is introduced into the output Xm of the master position (angle) sensor and whereby the outputs are considered to be normal if differences among them are within a certain range and abnormal if they are not within such range.

While the present embodiment involved an example of the force-feedback bilateral servo, it goes without saying that the embodiment can be similarly implemented with a parallel bilateral servo.

With reference to Figs. 14 to 19, embodiments of the bilateral servo control device of the invention as an automobile steering control device are described.

Fig. 14 shows an embodiment of a steer-by-wire master 100, specifically the steering column of a vehicle such as an automobile. The master 100 includes a steering wheel 110, torque sensor 111, angular sensor 112, and reaction force actuator 113. The reaction force actuator 104, which may be an electric motor such as a brushless motor, is drivingly connected to the rotary shaft (steering wheel axle) 110 via a speed-reduction mechanism as needed.

The angular sensor 112, which detects the angle Xm of rotation of the steering wheel 110 from a center position, is provided as a means for determining the amount of rotation of the steering wheel 110 from the center position. Similarly, the torque sensor 111 for determining a torque Fm is provided as a means for determining an operation force and a reaction force applied to the steering wheel 110.

Redundancy may be introduced into the torque sensor 111 and the angular sensor 112 in the form of torque sensors 111-1 to 111-n and angular sensors 112-1 to 112-n, as shown in Fig. 15, so that the embodiment shown in Fig. 12 can be implemented.

Fig. 16 shows an embodiment of a steer-by-wire slave 200, specifically the steering mechanism (vehicle body) of a vehicle such as an automobile. The steering mechanism includes steering wheels (tires) 210, a steering transmission mechanism 211, a steering actuator 212, an angular sensor 213, and a torque sensor 214.

The steering actuator 212 may be comprised of a known electric motor, such as a blushless motor, for example. The steering transmission mechanism 211 may be comprised of a known mechanism and is not particularly limited as long as it is capable of transmitting the motion of the steering actuator 212 to the steering wheels 210 such that the steering angle can be varied.

For example, the steering transmission mechanism 211 may be comprised of a motion conversion mechanism, such as a ball screw mechanism, for converting a rotary motion of the output shaft of the steering actuator 212 into a linear motion of the steering rod, which is not shown. The movement of the steering rod is transmitted to the steering wheels 210 via a tie rod and a knuckle arm, both of which are not shown, whereby the toe angle of the steering wheels 211 can be changed.

Alternatively, the steering transmission mechanism 211 may be comprised of a combination of a pinion gear coupled with the output shaft of the steering actuator 212 and a rack bar connected to the tie rod, instead of the ball screw mechanism.

The steering angle Xs of the steering mechanism is detected by the angular sensor 213. The torque Fs is detected by the torque sensor 214.

As shown in Fig. 17, the slave 200 may be provided with a lateral accelerometer or yaw rate sensor 215, and its output, namely, lateral acceleration Gy or yaw rate ω, may be used as a representative value of reaction force on the slave end. In this case, the torque sensor 214 can be eliminated, as shown in Fig. 18.

The angular sensor 213 and the torque sensor 214 may be redundantly provided as angular sensors 213-1 to 213-n and torque sensors 214-1 to 214-n, as shown in Fig. 19.

With reference to Figs. 20 to 22, embodiments of the bilateral servo control device of the invention as an automobile brake control device are described.

Fig. 20 shows an embodiment of a brake-by-wire master 100, specifically a stroke simulator. The master 100 includes a brake pedal 120, force sensor 121, angular sensor 122, and reaction force actuator 123, which are connected with a rotary shaft 124 supported rotatably at its end on the vehicle side. The angular sensor 122 detects the amount of depression of the brake pedal 120, while the force applied is detected by the force sensor 121. The force sensor 121 and the angular sensor 122 may be redundantly provided as needed for improving reliability.

Fig. 21 shows an embodiment of a brake-by-wire slave 200, specifically an electric brake. The electric brake includes a brake-driving actuator 220, motion conversion mechanism 221, brake pad 222, brake disc 226 fitted on an axle 225 of the wheels 224, position sensor 227, and force sensor 228.

A rotary motion about the motor output axis generated by the brake-driving actuator 220 is converted into a linear motion by the motion conversion mechanism 221. As a result of the linear motion conversion, the brake pad 222 is pressed against the brake disc 226, thereby producing a braking force. The position of the brake pad 222 is detected by the position sensor 227, while the pressing force is detected by the force sensor 228.

The control system for the brake-by-wire system may be based on the bilateral servo control devices shown in Figs. 2 to 13. However, because the braking force is proportional to the pressing force of the brake pad 222, the control system preferably employs the output Fm of the force sensor of the master 100 as a control target value. In this case, too, reliability can be improved by the apparatus of the invention in which the output Xm of the position sensor is fed back to the master 100 for position feedback, as shown in Fig. 22.

As described above, reliability of a brake-by-wire system can be improved by effectively utilizing a sensor that has originally been added for improving bilateral servo operability.

With reference to Figs. 23 and 24, embodiments of the bilateral servo control device of the invention as an aircraft steering control device are described.

Fig. 23 shows an embodiment of a fly-by-wire master 100, specifically a control column or a side stick. The master 100 includes an operating member 130, such as a control column or side stick installed in the flight deck, torque sensor 131, position (angle) sensor 132, and reaction force actuator 133, which are mutually coupled via a rotary shaft 134.

The amount of operation of the control column or side stick 112 is detected by the position (angle) sensor 132. The force or reaction force of the control column or side stick is detected by the torque sensor 131.

Fig. 24 shows an embodiment of a fly-by-wire slave 200, specifically a control surface device. The control surface device includes a control surface 230, driving actuator 231, torque sensor 232, and angular sensor 233, which are mutually coupled via a rotary shaft 234.

The control surface 230 is driven by the driving actuator 231. The angle of rotation of the control surface 230 is detected by the angular sensor 233. The force applied to the control surface 230 is detected by the torque sensor 232.

In accordance with the above-described embodiments, the reliability of a fly-by-wire system can be improved by effectively utilizing a sensor that has originally been added for improving bilateral servo operability.

INDUSTRIAL APPLICABILITY

The bilateral servo control device according to the invention, which is a feedback or parallel bilateral servo control device, can be utilized for steer-by-wire or brake-by-wire systems in vehicles such as automobiles or fly-by-wire systems in aircraft, and by so doing the reliability of such systems can be improved.

**Claims**

1. A bilateral servo control device for a master-slave control system comprising a master as an operating end and a slave as an effecting end, wherein said master comprises a first sensor for determining a control target value of said slave and a second sensor for controlling a reaction force to said master, wherein the reaction force of said slave acts on said master, said control device further comprising:

   an operator for determining the control target value of said slave based on the outputs of said first sensor and said second sensor of said master.

2. The bilateral servo control device according to claim 1, wherein said control device is a force-feedback bilateral servo control device.

3. The bilateral servo control device according to claim 1, wherein said control device is a parallel bilateral servo control device.

4. The bilateral servo control device according to claim 1, wherein said operator determines the control target value of said slave by adding a value related to the output of said second sensor to the output of said first sensor.

5. The bilateral servo control device according to claim 1, wherein said operator determines the control target value of said slave by adding a difference between a value that is related to the output of said second sensor and the control target value of said master to the output of said first sensor.

6. The bilateral servo control device according to claim 1, wherein said operator determines the control target value of said slave by a majority voting of a value related to the output of said second sensor and the output of said first sensor.

7. The bilateral servo control device according to claim 1, wherein said operator calculates the control target value of said slave by a majority voting of a difference between a value related to the output of said second sensor and the control target value of said master and the output of said first sensor.

8. The bilateral servo control device according to claim 4, further comprising:

   a proportional calculating unit to which the output of said second sensor is fed and which outputs a value related to the output of said second sensor.

9. The bilateral servo control device according to claim 8, wherein said proportional calculating unit includes a dead band factor near zero.

10. The bilateral servo control device according to claim 5, further comprising:

    a proportional calculating unit to which the output of said second sensor is fed and which outputs a value related to the output of said second sensor.

11. The bilateral servo control device according to claim 10, wherein said proportional calculating unit includes a dead band factor near zero.

12. The bilateral servo control device according to claim 1, further comprising:

    an examination means for determining whether the output of said first sensor is normal or abnormal,

wherein, if said examination means determines that the output of said first sensor is normal, the control target value of said slave is determined based on the output of said first sensor, and if said examination means determines that the output of said first sensor is abnormal, the control target value of said slave is determined based on the output of said second sensor.

13. The bilateral servo control device according to claim 1, further comprising:

an examination means for determining whether the output of said first sensor is normal or abnormal,
wherein, if said examination means determines that the output of said first sensor is normal, the control target value of said slave is determined based on the output of said first sensor, and if said examination means determines that the output of said first sensor is abnormal, the control target value of said slave is determined based on a difference between the output of said second sensor and the control target value of said master.

14. The bilateral servo control device according to claim 1, wherein said master comprises a steering column for the steering control of an automobile and said slave comprises a steering mechanism of the automobile, such that said bilateral servo control device constitutes an automobile steering control device.

15. The bilateral servo control device according to claim 1, wherein said master comprises a brake pedal for the brake control of an automobile and said slave comprises a steering mechanism of the automobile, such that said bilateral servo control device constitutes an automobile brake control device.

16. The bilateral servo control device according to claim 1, wherein said master comprises an operating member, such as a control column or a side stick, of an airplane, and said slave comprises a control surface control mechanism of the airplane, such that said bilateral servo control device constitutes an aircraft control surface control device.

# FIG. 1

SLAVE SENSOR OUTPUT

100

101 — POSITION SENSOR

MASTER

102 — FORCE SENSOR

*Xm (Fm)*
NORMAL SENSOR OUTPUT

*Fm (Xm)*
AUXILIARY SENSOR OUTPUT

*Ym*
REACTION FORCE CONTROL OUTPUT

30

SLAVE CONTROL UNIT

*Ys*

40

MASTER CONTROL UNIT

SLAVE — 200

REACTION FORCE TARGET VALUE

# FIG. 2

503

100 *Fm*

*Fs* 200

202

H(s)

102 — FORCE SENSOR

MASTER

101 — POSITION SENSOR

*Ym*

SERVO CONTROLLER

400  502

*Xm*

SERVO CONTROLLER

300

*Ys*

FORCE SENSOR

SLAVE

201

POSITION SENSOR

*Fs*

*Xs*

310

501

H

OPERATOR

EP 1 710 652 A1

## FIG. 3

## FIG. 4

12

# FIG. 5

# FIG. 6

# FIG. 7

# FIG. 8

# FIG. 9

# FIG. 10

EP 1 710 652 A1

## FIG. 11

## FIG. 12

16

## FIG. 13

## FIG. 14

# FIG. 15

100

110

111-1 → Fm1

111-n → Fmn

114

112-1 → Xm1

112-n → Xmn

113 ← Ym

# FIG. 16

200

212 ← Ys

214 → Fs

213 → Xs

211

210

## FIG. 17

## FIG. 18

## FIG. 19

## FIG. 20

# FIG. 21

# FIG. 22

# FIG. 23

# FIG. 24

## INTERNATIONAL SEARCH REPORT

| International application No. |
|---|
| PCT/JP2004/000425 |

| A. CLASSIFICATION OF SUBJECT MATTER |
|---|
| Int.Cl$^7$  G05D3/12, B62D6/00, B64C13/50, B60T8/00 |
| According to International Patent Classification (IPC) or to both national classification and IPC |

| B. FIELDS SEARCHED |
|---|
| Minimum documentation searched (classification system followed by classification symbols) |
| Int.Cl$^7$  G05D3/12, B62D6/00, B64C13/50, B60T8/00, B25J3/00 |

Documentation searched other than minimum documentation to the extent that such documents are included in the fields searched

| Jitsuyo Shinan Koho | 1922-1996 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 6-95728 A  (Hitachi, Ltd.), 08 April, 1994 (08.04.94), Full text (Family: none) | 1-16 |
| A | JP 6-126659 A  (Yaskawa Electric Corp.), 10 May, 1994 (10.05.94), Full text (Family: none) | 1-16 |
| A | JP 10-202558 A  (Toshiba Corp.), 08 April, 1998 (08.04.98), Full text (Family: none) | 1-16 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 April, 2004 (06.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2004/000425 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 2003-11838 A (Koyo Seiko Co., Ltd.), 15 January, 2003 (15.01.03), Full text (Family: none) | 1-16 |
| A | US 5949686 A (KOMATSU Ltd.), 07 September, 1999 (07.09.99), Full text & JP 08-118262 A Full text & WO 96/09144 A1    & EP 0816020 A1 | 1-16 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10202558 A
- JP 2003011838 A
- JP 7125643 A
- JP 11334559 A
- JP 2003063373 A